# EUROPÄISCHE PATENTSCHRIFT

(11) **EP 0 604 796 B1**
(45) Veröffentlichungstag und Bekanntmachung des Hinweises auf die Patenterteilung: **09.04.1997**
(21) Anmeldenummer: 93119726.3
(22) Anmeldetag: 08.12.1993
(51) Int. Cl.: C08F 265/04, C08F 279/02, C08L 101/00

(54) **Teilchenförmiges Pfropfpolymerisat und hieraus erhaltene thermoplastische Formmasse**
Graft polymer in particles and thermoplastic moulding composition obtained therefrom
Polymère greffé particulaire et masse à moulé thermoplastique obtenu à partir de ce polymère

(30) Priorität: 16.12.1992 DE 4242485
(43) Veröffentlichungstag der Anmeldung: 06.07.1994
(73) Patentinhaber: BASF Aktiengesellschaft, 67063 Ludwigshafen (DE)
(72) Erfinder: Fischer, Wolfgang, Dr., D-67067 Ludwigshafen (DE); Guentherberg, Norbert, Dr., D-67346 Speyer (DE)

(56) Entgegenhaltungen:
- EP-A- 0 154 804
- EP-A- 0 450 511
- FR-A- 2 176 782

## Beschreibung

Die Erfindung betrifft teilchenförmige Pfropfpolymerisate sowie aus diesen hergestellte matte thermoplastische Formmassen mit verbesserter Zähigkeit.

Die Herstellung teilchenförmiger Pfropfpolymerisate aus einem kautschukelastischen Kern, d.h. einem Polymeren mit einer Glasübergangstemperatur von unter 0°C, und einer Pfropfhülle, z.B. durch Emulsionspolymerisation, ist bekannt. Hierzu wird zunächst durch Emulsionspolymerisation geeigneter Monomere eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Die teilchenförmigen Pfropfpolymerisate werden zur Verbesserung der Schlagzähigkeit an sich spröder, schlagempfindlicher Thermoplaste verwendet. Dabei werden die Monomeren für die Pfropfhülle so gewählt, daß diese mit dem zu modifizierenden Thermoplasten verträglich ist. Die Herstellung solcher Schlagzähmodifier ist seit langem bekannt und z.B. in der US-PS 3 055 859 und der DE-PS 12 60 135 beschrieben.

Ein Hauptproblem bei der Herstellung solcher teilchenförmiger Pfropfpolymerisate ist die Anbindung der Pfropfhülle an die Pfropfgrundlage. Bei schlechter Anbindung ist die schlagzähmodifizierende Wirkung nicht ausreichend, so daß nur Produkte mit verminderter Zähigkeit erhalten werden können. Zur Verbesserung der Anbindung wurden eine Reihe von Maßnahmen vorgeschlagen. EP 0 450 511 beschreibt eine Verbesserung der Anbindung, wenn als Pfropfgrundlage ein Polymerisat verwendet wird, das saure Gruppen enthaltende Monomere einpolymerisiert enthält und das auf das als Pfropfhülle basische Gruppen enthaltende Monomere aufgepfropft sind. Daraus hergestellte thermoplastische Formmassen zeigen matte Oberflächen. Als weitere Möglichkeit wird in EP 0 445 601 der Einsatz von Hydroxyalkylacrylat oder -methacrylat in der Pfropfgrundlage beschrieben, wobei jedoch keine matten Produkte erhalten werden.

Die FR-A-2 176 782 offenbart wärmehärtbare Pfropfcopolymerisate aus einer Pfropfgrundlage A) enthaltend Hydroxy alkylacrylate und einer Pfropfhülle B) enthaltend basische Gruppen, wobei das Verhältnis von Pfropfgrundlage A) zu Pfropfhülle B) 1:3 bis 1:20 beträgt.

In DE 34 05 938 wird der Einsatz von Pfropfpolymerisaten mit sauren Funktionen beschrieben, jedoch nur in Kombination mit Thermoplastharzen mit basischen Funktionen. Diese Polymermischungen zeigen zwar matte Oberflächen, aber es wird keine Verbesserung der Zähigkeit beobachtet.

DE 34 21 353 beschreibt Pfropfpolymerisate, bei denen in die Pfropfhülle Säuren oder Basen bzw. Säuren und Basen gleichzeitig einpolymerisiert werden. Dies führt jedoch zu keiner Verbesserung der Zähigkeit gegenüber dem Vergleich, während bei Einsatz des nachstehend beschriebenen erfindungsgemäßen Pfropfpolymerisats matte Formkörper mit deutlich höheren Zähigkeitswerten erhalten werden.

Es wurde gefunden, daß Formmassen mit verbesserter Zähigkeit resultieren, d.h. die Anbindung der Pfropfhülle an die Pfropfgrundlage deutlich verbessert werden kann, wenn man zusätzlich zu Hydroxyalkylacrylat oder -methacrylat in der Pfropfgrundlage 0,1 bis 10 Gew.-% basische oder saure Monomere in die Pfropfhülle einpolymerisiert. Formmassen mit dem erfindungsgemäßen Pfropfkautschuk führen zu matten Produkten mit sehr guter Zähigkeit auch bei niedrigerem Kautschukgehalt; der Pfropfkautschuk kann als Mattierungsmittel auch in anderen Zusammensetzungen verwendet werden.

Unmittelbarer Erfindungsgegenstand ist ein teilchenförmiges Pfropfpolymerisat aus - bezogen auf die Summe aus A und B -
A: 30 bis 90 Gew.-% mindestens einer elastomeren Pfropfgrundlage A mit einer mittleren Teilchengröße von 30 bis 1000 nm aus - bezogen auf A -
   - A11:: 85 bis 99,8 Gew.-% mindestens eines Alkylacrylats A11 mit 1-8 C-Atomen im Alkylrest,
   - A12:: 0,1 bis 5 Gew.-% mindestens eines polyfunktionellen, vernetzend wirkenden Monomeren A12 und
   - A13:: 0,1 bis 10 Gew.-% mindestens eines Hydroxyalkylacrylats oder -methylacrylats A13,
   oder
   - A111:: mindestens 50 Gew.-% eines oder mehrerer Diene A111,
   - A112:: bis zu 50 Gew.-% eines oder mehrerer ethylenisch ungesättigter Monomeren A112 und
   - A113:: 0,1 bis 10 Gew.-% mindestens eines Hydroxyalkylacrylats oder -methacrylats A113
   und
B: 10 bis 70 Gew.-% einer Pfropfhülle B, aus - bezogen auf B -
   - B1:: bis zu 99,9 Gew.-% mindestens eines vinylaromatischen Monomeren B1,
   - B2:: bis zu 99,9 Gew.-% mindestens eines polaren, copolymerisierbaren, ethylenisch ungesättigten Monomeren B2 und
   - B3:: 0,1 bis 20 Gew.-% mindestens eines eine oder mehrere basische oder saure Gruppen enthaltenden Monomeren B3.

Das Pfropfpolymerisat enthält z.B. die folgenden Mengen an Bestandteilen:
- A11:: bevorzugt 90 bis 99 Gew.-%
besonders bevorzugt 94 bis 98 Gew.-%
- A12:: bevorzugt 0,5 bis 5 Gew.-%
besonders bevorzugt 1 bis 3 Gew.-%
- A13:: bevorzugt 0,5 bis 5 Gew.-%
besonders bevorzugt 1 bis 3 Gew.-%

- A111:: bevorzugt mindestens 75 Gew.-%
besonders bevorzugt mindestens 97 Gew.-%
- A112:: bevorzugt 0 bis 25 Gew.-%
besonders bevorzugt 0 Gew.-%
- A113:: bevorzugt 0,5 bis 7 Gew.-%
besonders bevorzugt 0,5 bis 3 Gew.-%

Die Summe aus
- B1 und B2:: 80 bis 99 Gew.-%
bevorzugt 85 bis 99,5 Gew.-%
besonders bevorzugt 95 bis 99,5 Gew.-%
- B3:: bevorzugt 0,5 bis 15 Gew.-%
besonders bevorzugt 0,5 bis 5 Gew.-%.

Erfindungsgegenstand ist weiterhin eine thermoplastische Formmasse, die im wesentlichen aus 1 bis 50 Gew.-% des vorstehend beschriebenen teilchenförmigen Pfropfpolymerisats und 50 bis 99 Gew.-% mindestens eines Polymeren mit einer Glasübergangstemperatur von mehr als 25°C als Matrix und gegebenenfalls untergeordneten Mengen an üblichen Zusatz- und Hilfsstoffen besteht. Solche thermoplastischen Formmassen mit matten Oberflächen erhält man dadurch, daß man schlagzäh modifizierten Thermoplasten, beispielsweise ABS, ASA, schlagzähem Polystyrol (HIPS), Polycarbonat/ABS, Polycarbonat/ASA, Polyphenylenether/HIPS, schlagzähem Polymethylmethacrylat, schlagzähem PVC sowie deren Mischungen untereinander 1 bis 50 Gew.-% des erfindungsgemäßen teilchenförmigen Pfropfpolymerisats zusetzt.

Formmassen mit matten Oberflächen erhält man auch mit Polymeren aus der Klasse der Polycarbonate, Polyestercarbonate, Polyester, Polyamide, Polyphenylenether, Polyetherketone, Polyethersulfone, Polysulfone, Polyoxylalkylene, Polyarylensulfide sowie deren Mischungen untereinander.

Gegenstand der Erfindung sind somit teilchenförmige Pfropfpolymerisate der vorstehenden, herstellungsbedingten Zusammensetzung sowie unter Verwendung solcher Pfropfpolymerisate hergestellte thermoplastische Formmassen. Über die erfindungsgemäßen teilchenförmigen Pfropfcopolymerisate, ihre Bestandteile und ihre Herstellung ist im einzelnen das folgende zu sagen:

Die teilchenförmigen Pfropfpolymerisate werden aus einer Pfropfgrundlage (Kautschuk) A und einer Pfropfhülle B in an sich bekannter Weise erhalten. Als Kautschuk A dient entweder ein vernetztes Acrylsäureester-Polymerisat oder ein Diencopolymerisat mit einer Glasübergangstemperatur unter 0°C, bevorzugt unter -20°C.

Als Monomere A11 kommen Acrylsäureester mit 1 bis 8 Kohlenstoffatomen, mindestens teilweise solche mit 4 bis 8 Kohlenstoffatomen, im Alkylrest in Betracht. Als geeignet seien besonders Acrylsäure-n-butylester und Acrylsäureethylhexylester genannt. Die Acrylsäureester können jeweils allein oder auch in Mischung miteinander eingesetzt werden.

Zur Erzielung guter mechanischer Eigenschaften hat es sich als notwendig erwiesen, daß das als Pfropfgrundlage verwendete Acrylsäureester-Polymerisat vernetzt ist. Hierzu wird die Polymerisation der Acrylsäureester in Gegenwart von 0,1 bis 5 Gew.-%, bezogen auf das Gesamtgewicht der bei der Herstellung der Pfropfgrundlage eingesetzten Monomeren, eines copolymerisierbaren, polyfunktionellen, die Vernetzung bewirkenden Monomeren A12 durchgeführt. Es eignen sich Monomere, die mindestens zwei zur Copolymerisation befähigte ethylenische Doppelbindungen enthalten, die nicht in 1,3-Stellung konjugiert sind. Beispiele sind Divinylbenzol, Diallylmaleat, Diallylfumarat, Diallylphthalat, Allylmethacrylat, Triallylcyanurat oder Triallylisocyanurat. Als besonders günstiges Vernetzungsmonomeres hat sich der Acrylsäureester des Tricyclodecenylalkohols erwiesen (vgl. DE-PS 12 60 135).

Die Anbindung der Pfropfhülle an die Pfropfgrundlage wird erheblich verbessert durch 0,1 bis 10 Gew.-% eines Hydroxyalkylacrylates oder Hydroxyalkylmethacrylates A13 in Verbindung mit dem basische oder saure Gruppen enthaltenden Monomere B3 der Pfropfhülle. Geeignete Hydroxyalkylacrylate bzw. -methacrylate sind Ester der Acrylsäure bzw. Methacrylsäure mit mehrwertigen Alkoholen. Besonders bevorzugte Hydroxyalkylacrylate enthalten 2 bis 6 Kohlenstoffatome im Alkylrest, wie z.B. 2-Hydroxyethylacrylat, 2-Hydroxyethylmethacrylat und 4-Hydroxybutylacrylat.

Die Herstellung des Pfropfmischpolymerisats kann nach der in der DE-PS 12 60 135 beschriebenen Methode erfolgen. Hierzu wird zunächst die Pfropfgrundlage A hergestellt; wenn die Pfropfgrundlage ein Acrylatkautschuk sein soll, wird der oder die Acrylsäureester A11, das polyfunktionelle Monomere A12 und das Hydroxyalkylacrylat oder -methylacrylat A13 in wäßriger Emulsion bei 20 bis 100°C, bevorzugt zwischen 50 und 80°C polymerisiert. Es können die üblichen Emulgatoren wie die Alkalisalze von Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie z.B. Kaliumperoxodisulfat; geeignet sind jedoch auch Redoxsysteme. Die Menge an Initiatoren (z.B. 0,1 bis 1 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres alpha-Methylstyrol verwendet werden.

Die genauen Polymerisationsbedingungen, insbesondere Art, Dosierung und Menge des Emulgators werden innerhalb der oben angegebenen Bereiche so bestimmt, daß der erhaltene Latex des vernetzten Acrylsäureester-Polymerisats einen d₅₀-Wert im Bereich von etwa 30 bis 1000 nm, bevorzugt im Bereich von 50 bis 800 nm besitzt. Der d₅₀-Wert der Teilchengröße wird wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder unter einer bestimmten Größe haben. Der mittlere Teilchendurchmesser, der auch als d₅₀-Wert der integralen Masseverteilung bezeichnet wird, ist dabei als der Wert definiert, bei dem 50 Gewichtsprozent der Teilchen einen kleineren und 50 Gewichtsprozent der Teilchen einen größeren Durchmesser als der d₅₀-Wert aufweisen.

Wenn der Pfropfkern ein Dienkautschuk sein soll, wird zweckmäßig wie folgt verfahren: Das Elastomer, die Pfropfgrundlage A wird hergestellt, indem A111 und A113 allein, gegebenenfalls mit den weiteren Comonomeren A112 in wäßriger Emulsion in an sich bekannter Weise bei Temperaturen von 20 bis 100°C, vorzugsweise von 50 bis 80°C, polymerisert werden. Es können die üblichen Emulgatoren, wie Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen, verwendet werden. Vorzugsweise nimmt man die Natrium- oder Kaliumsalze von Alkylsulfonaten oder Fettsäuren mit 10 bis 18 Kohlenstoffatomen. Es ist günstig, die Emulgatoren in Mengen von 0,5 bis 5 Gew.-%, insbesondere von 0,5 bis 2 Gew.-%, bezogen auf die bei der Herstellung der Pfropfgrundlage A eingesetzten Monomeren, einzusetzen. Im allgemeinen wird bei einem Wasser- und Monomeren-Verhältnis von 2:1 bis 0,7:1 gearbeitet. Als Polymerisationsinitiatoren dienen insbesondere die gebräuchlichen Persulfate, wie Kaliumpersulfat, es können jedoch auch Redox-Systeme zum Einsatz gelangen. Die Initiatoren werden im allgemeinen in Mengen von 0,1 bis 1 Gew.-%, bezogen auf die bei der Herstellung der Pfropfgrundlage A eingesetzten Monomeren, eingesetzt. Als weitere Polymerisationshilfsstoffe können die üblichen Puffersubstanzen, durch welche pH-Werte von vorzugsweise 6 bis 9 eingestellt werden - z.B. Natriumbicarbonat und Natriumpyrophosphate dienen; ferner können in der Regel 0,1 bis 3 Gew.-% eines Molekulargewichtsreglers- wie Mercaptane, Terpinole oder dimeres alpha-Methylstyrol - bei der Polymerisation verwendet werden.

Die genauen Polymerisationsbedingungen, insbesondere Art, Dosierung und Menge des Emulgators, werden innerhalb der oben angegebenen Bereiche im einzelnen so gewählt, daß der erhaltene Latex des Dienpolymerisats A einen d₅₀-Wert (vgl.oben) im Bereich von etwa 100 bis 750 nm, vorzugsweise im Bereich von 100 bis 600 nm, besitzt. Oder aber das Emulsionspolymerisat mit mittleren Teilchengrößen im Bereich von 60 bis 150 nm wird in bekannter Weise agglomeriert (vgl. DE-AS 24 27 960).

Zur Herstellung des Pfropfmischpolymerisates aus Kern und Pfropfhülle wird in Gegenwart des erhaltenen Latex A ein Monomerengemisch aus bis zu 99,9 Gew.-% mindestens eines vinylaromatischen Monomeren B1, 0 bis 99,9 Gew.-% mindestens eines polaren, copolymerisierbaren Monomeren B2 und 0,1 bis 20 Gew.-% mindestens eines sauren oder basischen Monomeren B3 polymerisiert. Beispiele für vinylaromatische Monomere sind Styrol, alpha-Methylstyrol und kernalkylierte Styrole wie p-Methylstyrol und ter.-Butylstyrol. Besonders bevorzugt werden Styrol, alpha-Methylstyrol und p-Methylstyrol eingesetzt. Beispiele für polare, copolymerisierbare, ethylenisch ungesättigte Monomere B2 sind Acrylnitril, Methacrylnitril, Acrylsäure- und Methacrylsäurealkylester mit 1 bis 4 lenstoffatomen im Alkylrest. Bevorzugt werden Acrylnitril, Methylmethacrylat und Gemische derselben. Zur weiteren Verbesserung der Anbindung der Pfropfhülle an die Pfropfgrundlage und zur Erzielung der Mattigkeit enthält das zur Herstellung der Pfropfhülle verwendete Monomerengemisch 0,1 bis 20 Gew.-% eines oder mehrerer copolymerisierbare Monomere, die eine oder mehrere saure oder basische Gruppen enthalten (B3). Als saure Gruppen kommen insbesondere Carbonsäure- oder Sulfonsäuregruppen in Frage. Bevorzugte saure Monomere sind alpha- beta ungesättigte Carbonsäuren wie Acrylsäure oder Methacrylsäure, ferner Citraconsäure, Crotonsäure, Fumarsäure, Itaconsäure, Maleinsäure, Vinylsulfonsäure, Vinylbenzolsulfonsäure, Vinylphosphorsäuren oder Zimtsäure. Bevorzugte Monomere mit basischen Gruppen enthalten im Molekül eine tertiäre Aminogruppe. Hier seien als Beispiele genannt: Dimethylaminoethyl(meth)acrylat, Morpholinmethylacrylat, N-Vinylimidazol, p-Dimethylaminostyrol, N-Vinylcarbazol, N-Vinylindol, N-Vinylpyrrol, 4-Vinylpyrimidin, 2-Vinylpyridin, 3-Vinylpyridin, 4-Vinylpyridin sowie deren Gemische. Besonders bevorzugte Monomere sind Ester der Acrylsäure oder Methacrylsäure mit aliphatischen Alkoholen, die im Alkylrest eine tertiäre Aminogruppe enthalten.

Es ist vorteilhaft, die Pfropfmischpolymerisation auf das als Pfropfgrundlage A dienende Polymerisat wiederum in wäßriger Emulsion durchzuführen. Sie kann im gleichen System wie die Polymerisation der Pfropfgrundlage vorgenommen werden, wobei weiter Emulgator und Initiator zugegeben werden kann. Diese müssen mit den zur Herstellung der Pfropfgrundlage A verwendeten Emulgatoren bzw. Initiatoren nicht identisch sein. So kann es z.B. zweckmäßig sein, als Initiator für die Herstellung der Pfropfgrundlage A ein Persulfat zu verwenden, zur Polymerisation der Pfropfhülle B jedoch ein Redoxinitiatorsystem einzusetzen. Im übrigen gilt für die Wahl von Emulgator, Initiator und Polymerisationshilfsstoffen das bei der Herstellung der Pfropfgrundlage A gesagte. Das aufzupfropfende Monomerengemisch kann dem Reaktionsgemisch auf einmal, absatzweise in mehreren Stufen oder vorzugsweise kontinuierlich während der Polymerisation zugegeben werden. Die Pfropfmischpolymerisation wird so gesteuert, daß ein Pfropfgrad von 10 bis 60 Gew.-%, vorzugsweise von 15 bis 45 Gew.-%, resultiert.

Die erfindungsgemäßen teilchenförmigen Pfropfpolymerisate können für sich allein als Formmassen verwendet werden. Hierzu können sie z.B. durch Sprühtrocknung aufgearbeitet werden. Bevorzugt werden die teilchenförmigen Pfropfpolymerisate jedoch zur Abmischung mit einem Thermoplasten verwendet, um dessen Schlagzähigkeit zu erhöhen. Zur Modifizierung geeignete Thermoplaste haben Glasübergangstemperaturen über 25°C, bevorzugt über 60°C. Sie werden im folgenden auch als Hartkomponente (Matrix) bezeichnet. Beispiele für geeignete Hartkomponenten sind Polyvinylchlorid, Polymethylmethycrylat sowie insbesondere Copolymere aus einem vinylaromatischen Monomeren und einem polaren, copolymerisierbaren, ethylenisch ungesättigten Monomeren. Geeignete vinylaromatische sowie polare, copolymerisierbare, ethylenisch ungesättigte Monomere sind auch hier die bei der Herstellung der Pfropfhülle B1 und B2 genannten. Besonders bevorzugte Hartkomponenten sind Styrol-Acrylnitril und alpha-Methylstyrol-Acrylnitril-Copolymere. Die Einarbeitung der erfindungsgemäßen teilchenförmigen Pfropfpolymerisate kann z.B. dadurch erfolgen, daß das teilchenförmige Pfropfpolymerisat durch Zugabe eines Elektrolyten aus der Emulsion isoliert wird und anschließend, nach Trocknung, durch gemeinsames Extrudieren, Kneten oder Walzen mit der Hartkomponente vermischt wird.

Die erfindungsgemäßen thermoplastischen Formmassen können als weitere Bestandteile Zusatzstoffe enthalten, wie sie für thermoplastische Formmassen üblich sind. Als solche seien beispielsweise genannt: Füllstoffe, weitere, verträgliche Kunststoffe, Antistatika, Antioxidantien, Flammschutzmittel, Schmiermittel, Farbstoffe und Pigmente. Die Zusatzstoffe werden in üblichen Mengen von bis zu 30 Gew.-%, bezogen auf das Gesamtgewicht der thermoplastischen Formmasse, eingesetzt. Verträgliche Kunststoffe können auch einen höheren Anteil ausmachen.

Die erfindungsgemäßen Massen lassen sich nach den für die Thermoplastverarbeitung üblichen Verfahren, wie z.B. Extrusion und Spritzgießen, zu den verschiedenartigsten Formkörpern, wie z.B. Fensterprofilen, Gartenmöbeln, Booten, Schildern, Lampenabdeckungen, Automobilteilen, Elektro- und Haushaltsgerätegehäuse und Kinderspielzeug verarbeiten. Die erfindungsgemäßen Massen eignen sich besonders zur Herstellung von Formkörpern, bei denen eine hohe Schlagzähigkeit gefordert ist.

Die in den Beispielen genannten Teile und Prozente beziehen sich, soweit nicht anders angegeben, auf das Gewicht.

### Beispiele 1 und 2

a) Herstellung einer Pfropfgrundlage A
   Herstellung der jeweiligen Pfropfgrundlage auf Acrylesterbasis (A11, A12, A13) erfolgte nach folgender allgemeiner Vorschrift:
   160 g eines in der Tabelle zur Herstellung der Pfropfgrundlage A angegebenen Monomerengemisches wurden in 1500 g Wasser unter Zusatz von 5 g des Natriumsalzes einer C₁₂-bis C₁₈-Paraffinsulfonsäure, 3 g Kaliumperoxodisulfat, 3 g Natriumhydrogencarbonat und 1,5 g Natriumpyrophosphat unter Rühren auf 60°C erwärmt. 10 Minuten nach dem Anspringen der Polymerisationsreaktion wurden innerhalb von 3 Stunden weitere 840 g der in der Tabelle angegebenen Mischung zugegeben. Nach Beendigung der Monomerzugabe wurde die Emulsion noch eine Stunde bei 60°C gehalten.
b) Herstellung eines teilchenförmigen Pfropfpolymerisats
   2100 g der nach Vorschrift a) hergestellten Emulsion wurden mit 1150 g Wasser und 2,7 g Kaliumperoxodisulfat gemischt und unter Rühren auf 65°C erwärmt. Nach Erreichen der Reaktionstemperatur wurden im Lauf von 3 Stunden 560 g des in der Tabelle für die Herstellung der Pfropfhülle B angegebenen Monomerengemisches zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

### Beispiel 3

a) Die Herstellung der jeweiligen Pfropfgrundlage auf Butadienbasis (A111, A112, A113) erfolgte nach folgender Vorschrift:
   Durch Polymerisation von 600 g des Monomerengemisches A111, A112, A113 in Gegenwart einer Lösung von 6 g tert.-Dodecylmercaptan, 7 g C₁₄-Na-Alkylsulfonat als Emulgator, 2 g Kaliumperoxodisulfat und 2 g Natriumpyrophosphat in 800 ml Wasser wird bei 65°C ein Polybutadienlatex hergestellt. Der Umsatz beträgt 98 %. Es wird ein Latex erhalten, dessen mittlere Teilchengröße bei 100 nm liegt. Der erhaltene Latex wird durch Zusatz von 25 g einer Emulsion eines Copolymeren aus 96 Teilen Ethylacrylat und 4 Teilen Methacrylsäureamid mit einem Feststoffgehalt von 10 Gew.-% agglomeriert, wobei ein Polybutadienlatex mit einer mittleren Teilchengröße von 350 nm steht.
b) Herstellung eines teilchenförmigen Pfropfpolymerisats
   Nach Zusetzen von 400 g Wasser, 4 g Na-C₁₄-Alkylsulfonat und 2 g Kaliumperoxodisulfat zu der nach Vorschrift 3b hergestellten Pfropfgrundlage werden 400 g einer Mischung aus Styrol und Acrylnitril sowie der Komponente B3 in den in der Tabelle angegebenen Verhältnissen innerhalb von 4 Stunden zugeführt. Die Polymerisation erfolgt unter Rühren des Ansatzes bei 75°C. Der Umsatz, bezogen auf Styrol-Acrylnitril ist praktisch quantitativ. Die erhaltene Pfropfkautschukdispersion wird mittels Magnesiumsulfatlösung gefällt und das abgetrennte Pfropfmischpolymerisat mit destilliertem Wasser gewaschen und getrocknet.

### Formmasse

Zur Herstellung der Abmischungen wurde als Matrix (Hartkomponente) ein Styrol/Acrylnitril-Copolymerisat mit einem Acrylnitril-Gehalt von 35 % und einer Viskositätszahl von 80 ml/g verwendet. Das gefällte und getrocknete Pfropfmischpolymerisat (vgl. Beispiele) wurde auf einem Extruder bei 260°C mit der Hartkomponente abgemischt, wobei das resultierende Gemisch jeweils einen Pfropfpolymerisatanteil von 30 % aufwies. Aus diesem Gemisch wurden durch Spritzguß Formteile hergestellt.

**Tabelle**

| (Bedeutung der Abkürzungen siehe unten) | | | | | | | | |
|---|---|---|---|---|---|---|---|---|
| | Pfropfgrundlage A¹⁾ | | | Pfropfhülle B²⁾ | | | Kerbschlagzähigkeit bei RT [kJ/m²] | Glanz³⁾ |
| | BA | DCPA | HEA | S | AN | B3 | | |
| 1 | 96,5 | 2 | 1,5 | 74,7 | 24 | 1,3 DMAEA | 10,7 | 19 |
| 2 | 96,5 | 2 | 1,5 | 75 | 24 | 1,0 MAS | 11,2 | 20 |
| 3 | - | 99 Bu | 1 | 70 | 29 | 1,0 MAS | 13 | 23 |
| V⁴⁾ | - | 100 Bu | - | 70 | 30 | - | 11 | 65 |
| V⁴⁾ | 96,5 | 2 | 1,5 | 75 | 25 | - | 6,4 | 62 |
| V⁴⁾ | 98 | 2 | - | 75 | 25 | - | 4,1 | 63 |
| V⁴⁾ | 97 | 2 | 1 MAS | 74 | 24 | 2 DMAEA | 8,7 | 21 |

| | | | | | | | | |
|---|---|---|---|---|---|---|---|---|
| ¹⁾ Zusammensetzung des zur Herstellung der Pfropfgrundlage A verwendeten Monomerengemisches | | | | | | | | |
| ²⁾ Zusammensetzung des zur Herstellung der Pfropfhülle B verwendeten Monomerengemisches | | | | | | | | |
| ³⁾ 45° Glanz | | | | | | | | |
| ⁴⁾ Vergleichsversuche entsprechend dem Stand der Technik | | | | | | | | |

- Bu =: Butadien
- BA =: Butylacrylat
- DCPA =: Acrylsäureester des Tricyclodecenylalkohols
- DMAEA =: Dimethylaminoethylacrylat
- HEA =: 2-Hydroxyethylacrylat
- S =: Styrol
- AN =: Acrylnitril
- MAS =: Methacrylsäure

## Patentansprüche

1. Teilchenförmiges Pfropfpolymerisat in getrockneter Form aus - bezogen auf die Summe aus A und B -
A: 30 bis 90 Gew.-% mindestens einer elastomeren Pfropfgrundlage A mit einer gewichtsmittleren Teilchengröße von 30 bis 1000 nm aus - bezogen auf A -
A11: 85 bis 99,8 Gew.-% mindestens eines Alkylacrylats A11 mit 1-8 C-Atomen im Alkylrest,
A12 0,1 bis 5 Gew.-% mindestens eines polyfunktionellen, vernetzend wirkenden Monomeren A12 und
A13 0,1 bis 10 Gew.-% mindestens eines Hydroxyalkylacrylats oder -methylacrylats A13,
oder
A111: mindestens 50 Gew.-% eines oder mehrerer Diene A111,
A112: bis zu 50 Gew.-% eines oder mehrerer ethylenisch ungesättigter Monomeren A112 und
A113: 0,1 bis 10 Gew.-% mindestens eines Hydroxyalkylacrylats oder -methacrylats A113
und
B: 10 bis 70 Gew.-% einer Pfropfhülle B aus - bezogen auf B -
B1: bis zu 99,9 Gew.-% mindestens eines vinylaromatischen Monomeren B1,
B2: bis zu 99,9 Gew.-% mindestens eines polaren, copolymerisierbaren, ethylenisch ungesättigten Monomeren B 2 und
B3: 0,1 bis 20 Gew.-% mindestens eines eine oder mehrere basische oder saure Gruppen enthaltenden Monomeren B3.

2. Thermoplastische Formmasse, im wesentlichen aus 1 bis 50 Gew.-% eines teilchenförmigen Pfropfpolymerisats nach Anspruch 1 und 50 bis 99 Gew.-% mindestens eines Polymeren mit einer Glasübergangstemperatur von mehr als 25°C als Matrix und gegebenenfalls untergeordneten Mengen an üblichen Zusatz- und Hilfsstoffen.

3. Verfahren zur Herstellung von Formmassen mit matten Oberflächen, dadurch gekennzeichnet, daß man einem schlagzäh modifizierten Thermoplasten, ausgewählt aus ABS, ASA, schlagzähem Polystyrol (HIPS), Polycarbonat/ABS, Polycarbonat/ASA, Polyphenylenether/HIPS, schlagzähem Polymethylmethacrylat, schlagzähem PVC sowie deren Mischungen untereinander 1 bis 50 Gew.-% eines teilchenförmigen Pfropfpolymerisats nach Anspruch 1 zusetzt.

## Claims

1. A particulate graft copolymer in dried form comprising, based on the sum of A and B,
A: 30 to 90 % by weight of at least one elastomeric grafting base A having a weight average particle size of from 30 to 1,000 nm comprising, based on A,
A11: 75 to 99.8 % by weight of at least one alkyl acrylate A11 having 1 to 8 carbon atoms in the alkyl radical,
A12: 0.1 to 5 % by weight of at least one polyfunctional, crosslinking monomer A12, and
A13: 0.1 to 10% by weight of at least one hydroxyalkyl acrylate or hydroxyalkyl methacrylate A13,
or
A111: at least 50 % by weight of one or more dienes A111,
A112: up to 50 % by weight of one or more ethylenically unsaturated monomers A112, and
A113: 0.1 to 10 % by weight of at least one hydroxyalkyl acrylate or hydroxyalkyl methacrylate A113,
and
B: 10 to 70 % by weight of a graft sheath B comprising, based on B,
B1: up to 99.9 % by weight of at least one aromatic vinyl monomer B1,
B2: up to 99.9 % by weight of at least one polar, copolymerizable, ethylenically unsaturated monomer B2, and
B3: 0.1 to 20 % by weight of at least one monomer B3 containing one or more basic or acidic groups.

2. A thermoplastic molding material essentially comprising 1 to 50 % by weight of a particulate graft copolymer as claimed in claim 1 and 50 to 99 % by weight of at least one polymer having a glass transition temperature of more than 25°C as matrix, and if desired minor amounts of conventional additives and auxiliaries.

3. A process for preparing molding materials having matt surfaces, characterized in that 1 to 50 % by weight of a particulate graft copolymer as claimed in claim 1 is added to an impact-modified thermoplastic selected from ABS, ASA, impact-modified polystyrene (HIPS), polycarbonate/ABS, polycarbonate/ASA, polyphenylene ether/HIPS, impact-modified polymethyl methacrylate, impact-resistant PVC, and also their mixtures with one another.

## Revendications

1. Polymère greffé particulaire sous forme séchée, constitué de, par rapport à la somme de A et de B,
A: 30 à 90 % en poids d'au moins une base de greffage élastomère A avec une granulométrie moyenne de 30 à 1.000 nm, constituée de, par rapport à A,
A11: 85 à 99,8 % en poids d'au moins un acrylate d'alkyle A11 avec 1 à 8 atomes de carbone dans le résidu alkyle,
A12: 0,1 à 5% en poids d'au moins un monomère A12 polyfonctionnel à action réticulante et
A13: 0,1 à 10 % en poids d'au moins un acrylate ou méthylacrylate d'hydroxyalkyle A13,
ou
A111: au moins 50 % en poids d'un ou de plusieurs diènes A111
A112: jusqu'à 50 % en poids d'un ou de plusieurs monomères A112 éthyléniquement insaturés et
A113: 0,1 à 10 % en poids d'au moins un acrylate ou méthacrylate d'hydroxyalkyle A113
et
B : 10 à 70 % en poids d'une enveloppe greffée, constituée de, par rapport à B,
B1: jusqu'à 99,9 % en poids d'au moins un monomère vinylaromatique B1,
B2: jusqu'à 99,9 % en poids d'au moins un monomère B2 polaire, copolymérisable et éthyléniquement insaturé et
B3: 0,1 à 20 % en poids d'au moins un monomère B3 contenant un ou plusieurs groupes basiques ou acides.

2. Masse à mouler thermoplastique constituée essentiellement de 1 à 50 % en poids d'un polymère greffé particulaire selon la revendication 1 et de 50 à 99 % en poids d'au moins un polymère avec une température de transition vitreuse supérieure à 25 °C à titre de matrice et éventuellement des quantités secondaires d'additifs et d'adjuvants courants.

3. Procédé de préparation de masses à mouler avec des surfaces mattes, caractérisé en ce qu'on ajoute à une masse thermoplastique modifiée du point de vue de la résistance aux chocs, choisie parmi l'ABS, l'ASA, le polystyrène résistant aux chocs (HIPS), le polycarbonate/ABS, le polycarbonate/ASA, l'éther de polyphénylène/HIPS, le poly(méthacrylate de méthyle) résistant aux chocs, le PVC résistant aux chocs, de même que leurs mélanges mutuels, 1 à 50 % en poids d'un polymère greffé particulaire selon la revendication 1.
